# EUROPEAN PATENT APPLICATION

(11) **EP 1 096 058 A2**
(43) Date of publication of application: **02.05.2001**
(21) Application number: 00123751.0
(22) Date of filing: 31.10.2000
(51) Int. Cl.: D06M 15/41, D06P 1/56, D06P 5/08, C08G 8/18

(54) **Formaldehyde condensate and fiber treatment agent containing it**

(30) Priority: 01.11.1999 JP 31119399
(71) Applicant: Nicca Chemical Co., Ltd., Fukui-shi, Fukui 910-8670 (JP)
(72) Inventor: Naitou, Yuki, Fukui-shi, Fukui 910-8670 (JP); Midori, Koji, Fukui-shi, Fukui 910-8670 (JP)
(74) Representative: Viering, Jentschura & Partner

(57) **Abstract**

A formaldehyde condensate obtained by a polycondensation reaction of a phenol compound mixture with formaldehyde and reduction treatment of the resulting polycondensation reaction product with a dithionite or thiosulfate, and a polyamide fiber material dye fixing agent and polyamide fiber material contamination inhibitor containing the formaldehyde condensate. The dye fixing agent and contamination inhibitor produce no coloration during treatment and exhibit low loss of light fastness.

## Description

### BACKGROUND OF THE INVENTION

### 1. Field of the Invention

The present invention relates to a formaldehyde condensate and to a polyamide fiber material dye fixing agent and a polyamide fiber material contamination inhibitor containing the condensate. The invention relates particularly to a polyamide fiber material dye fixing agent and polyamide fiber material contamination inhibitor that produce low coloration during treatment and cause little loss of light fastness.

### 2. Description of the Related Art

Polyamide fiber materials commonly employ formaldehyde condensates, representative of which are condensates obtained by condensation reaction of dihydroxydiphenylsulfone and phenolsulfonic acid salts with formaldehyde, and condensates obtained by condensation reaction of dihydroxydiphenylsulfone and sulfonated forms thereof with formaldehyde, known as synthetic tannins, as dye fixing agents for improved dye fastness of acid dyes, and as contamination inhibitors to inhibit contamination of anionic dyes. Formaldehyde condensates are also used as contamination inhibitors for carpets made of polyamide fibers, in order to provide a function to inhibit contamination by food dyes and the like.

However, conventional dye fixing agents and contamination inhibitors have a disadvantage in that they cause yellowish or light brown coloration of the polyamide fiber materials that are treated, tending to lead to color tone alterations or poorer quality, or resulting in a loss of light fastness. Such disadvantages are notably conspicuous with white or light-colored polyamide fiber materials. A number of measures have been tried to overcome these disadvantages, and, for example, a technique involving acylation or etherification of the phenolic hydroxyl groups of formaldehyde condensates has been disclosed (Japanese Unexamined Patent Publication No. 2-610). However, while this prevents treatment coloration and improves the light fastness, It has presented another disadvantage of lower dye fixing and contamination inhibiting properties. It has also been attempted to overcome these disadvantages by oxidizing formaldehyde condensates with hydrogen peroxide or other oxidizing agents, but adequate prevention of treatment coloration and improvement in light fastness have not been achieved. In addition, a reduction treatment, with bisulfite compounds such as sodium bisulfite, has also been attempted, but in order to achieve an adequate reduction effect with bisulfite compounds it is necessary to carry out the treatment under acidic conditions, and such a treatment tends to increase the viscosity of the formaldehyde condensate and lower the dye fixing and contamination inhibiting properties; it is therefore somewhat impractical, and hence a satisfactory solution has not yet been provided.

### BRIEF SUMMARY OF THE INVENTION

As a result of much diligent research aimed at finding such a solution, the present inventors have completed the present invention based on the discovery that it is possible to avoid lowering the dye fixing and contamination inhibiting properties and to prevent treatment coloration or loss of light fastness, by using a formaldehyde condensate obtained by a reduction treatment of a polycondensation reaction product obtained by polycondensation reaction of a specific phenol compound and formaldehyde, using a dithionite or a thiosulfate.

In other words, the present invention provides a formaldehyde condensate obtained by a polycondensation reaction of formaldehyde with a mixture comprising 30-70 wt% of a compound represented by the following general formula (1), 10-70 wt% of at least one type of compound represented by the following general formula (2), and optionally, the remainder of at least one type of compound represented by the following general formula (3), and then reduction treatment of the polycondensation reaction product with a dithionite represented by the following general formula (4) or a thiosulfate represented by the following general formula (5). 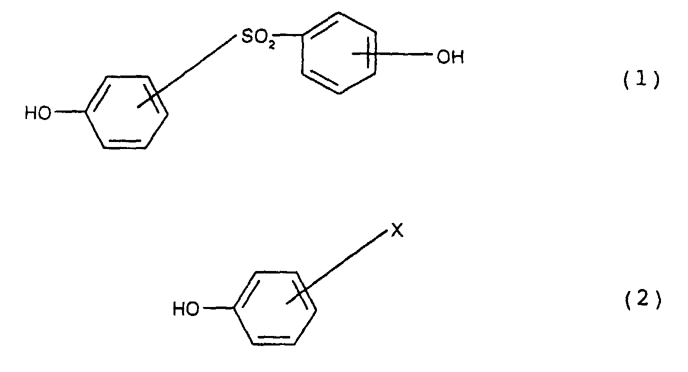 wherein X represents -SO₃M, 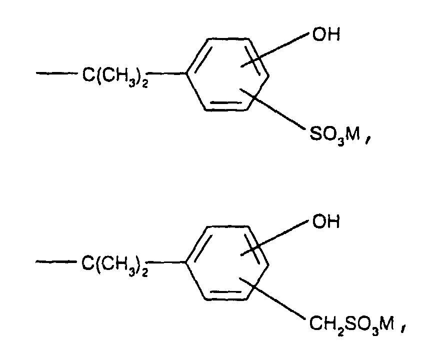 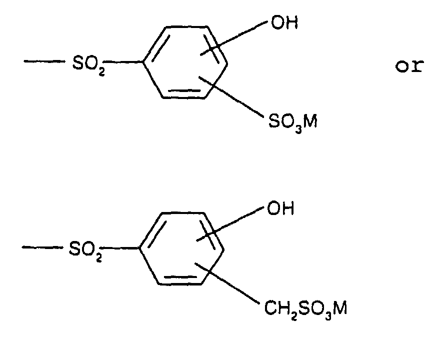 wherein each M represents a hydrogen atom, alkali metal, alkaline earth metal or -NH₄; 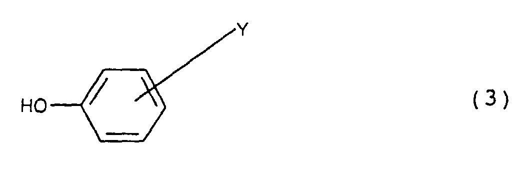 wherein Y represents a hydrogen atom, hydroxyl group, methyl group,

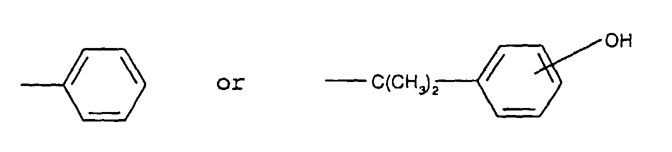

M¹S₂O₄ (4)

wherein M¹ represents an alkali metal, alkaline earth metal or -NH₄;

M²S₂O₃ (5)

wherein M² represents an alkali metal, alkaline earth metal or -NH₄.

The invention further provides a polyamide fiber material dye fixing agent or a polyamide fiber material contamination inhibitor that comprises the aforementioned formaldehyde condensate.

### DETAILED DESCRIPTION OF THE INVENTION

The compound of general formula (1) as used in the invention is a dihydroxydiphenylsulfone, of which 4,4'-, 2,4'- and 2,2'- isomers may be mentioned.

As examples of compounds of general formula (2) as used in the invention there may be mentioned phenolsulfonic acid, bisphenol A sulfonic acid, bisphenol A methylsulfonic acid, sulfonated dihydroxydiphenylsulfone, methylsulfonated dihydroxydiphenylsulfone, and sodium, potassium, calcium and ammonium salts of these sulfonic acids and sulfonated compounds.

As examples of compounds of general formula (3) as used in the invention there may be mentioned phenol, dioxybenzene, cresol, phenylphenol, bisphenol A, and the like.

The formaldehyde condensate of the invention is obtained by a polycondensation reaction of formaldehyde with a phenol compound mixture comprising 30-70 wt% of a compound of general formula (1) and 10-70 wt% of at least one compound of general formula (2), or a phenol compound mixture comprising 30-70 wt% of a compound of general formula (1), 10-70 wt% of at least one compound of general formula (2) and the remainder of at least one compound of general formula (3), and then a reduction treatment of the polycondensation reaction product with a dithionite of general formula (4) or a thiosulfate of general formula (5). The polycondensation reaction may be easily carried out by a known process, and for example, it may be carried out by reacting the phenol compound mixture and formaldehyde for 3-20 hours in an aqueous medium at a temperature of 90-130°C, using an alkali such as sodium hydroxide as a catalyst. The amount of formaldehyde supplied for the polycondensation reaction is preferably 0.5-1.5 moles per one mole in terms of the total number of moles of the phenol mixture. The reduction treatment of the reacted polycondensation reaction product using the dithionite or thiosulfate is preferably carried out by mixing 1-30 parts by weight and preferably 2-20 parts by weight of the dithionite or thiosulfate with 100 parts by weight of the polycondensation reaction product, and heating in an aqueous medium at a temperature of 40-150°C, and preferably 60-100°C. The dithionite used for the reduction treatment may be sodium dithionite, potassium dithionite, calcium dithionite, ammonium dithionite or the like, and the thiosulfate used may be sodium thiosulfate, potassium thiosulfate, calcium thiosulfate, ammonium thiosulfate or the like. The reduction treatment using the dithionite or thiosulfate may be carried out continuously without isolating the polycondensation reaction product after the polycondensation reaction, or it may be carried out after isolation of the polycondensation reaction product.

A polyamide fiber material dye fixing agent and polyamide fiber material contamination inhibitor according to the invention are obtained by diluting the formaldehyde condensate obtained by reduction treatment of the polycondensation reaction product to a suitable concentration using an appropriate solvent such as water. Anti-foaming agents, preservatives and the like that are conventionally used in dye fixing agents and contamination inhibitors may also be added so long as they do not interfere with the performance of the dye fixing agent or contamination inhibitor.

As polyamide fiber materials to be treated with the polyamide fiber material dye fixing agent and polyamide fiber material contamination inhibitor of the invention there may be mentioned aliphatic polyamide fibers such as nylon-6 fibers and nylon-66 fibers, or aromatic polyamide fibers such as xylylenediamine polyamide fibers; fibers other than polyamide fibers may also be included as a portion thereof. The polyamide fiber material may be in any form such as a yarn, cheese, woven fabric, knitted fabric, nonwoven fabric, carpet or the like.

The amount of the polyamide fiber material dye fixing agent and polyamide fiber material contamination inhibitor of the invention to be used is preferably 0.1-5% o.w.f. in terms of the formaldehyde condensate with respect to the polyamide fiber material, and it is preferably used as a diluted solution in water. There are no particular restrictions on the treatment method for a polyamide fiber material using the polyamide fiber material dye fixing agent and polyamide fiber material contamination inhibitor of the invention, and a known method such as the exhaustion method, padding method, spraying method or coating method may be used. For example, when an exhaustion method is used, the treatment temperature is preferably no higher than 100°C, and the treatment may be carried out by immersion for 5-30 minutes in the treatment solution at 30-100°C. When a padding method is used for treatment, the treatment may be carried out by immersing the polyamide fiber material in the treatment solution, squeezing with a mangle to a pick up of about 30-150% and then drying at 100-150°C or steaming at 100-150°C. When a spraying method is used, the treatment may be carried out by spraying the treatment solution to a pick-up of about 30-150% and then drying at 100-150°C or steaming at 100-150°C. In order to improve the exhaustion properties of the formaldehyde condensate of the invention, an acid or inorganic salt may also be added to the diluted treatment solution to lower the pH to 5 or below. As acids to be added there may be mentioned inorganic acids such as sulfuric acid or hydrochloric acid, organic acids such as formic acid or acetic acid, or sulfaminic acid or the like, and as inorganic salts there may be mentioned sodium sulfate, potassium sulfate, magnesium sulfate, magnesium chloride, calcium chloride and the like.

Phenol compounds produce quinone compounds as by-products of oxidation during the polycondensation reaction, and these can cause treatment coloration. While the effect of the formaldehyde condensate of the invention is not fully understood, it is conjectured that the reduction treatment of the polycondensation reaction product restores the oxidized by-products to phenol compounds, thus inhibiting treatment coloration. The improvement in light fastness is believed to be due to the fact that the reduction-treated formaldehyde condensate becomes less susceptible to oxidation by light.

The present invention will now be further illustrated by way of examples which, however, are in no way intended restrict the invention.

### Synthesis Example 1

After loading 2500 g of 4,4'-dihydroxydiphenylsulfone, 980 g of sodium para-phenolsulfonate, 240 g of sodium hydroxide, 1000 g of a 37% aqueous formaldehyde solution and 2980 g of water in an autoclave pressure-resistant vessel, the mixture was heated at 130°C for 4 hours while stirring for a polycondensation reaction, to obtain an aqueous solution of polycondensation reaction product 1. The effective component concentration was 50 wt%.

### Synthesis Example 2

After loading 2200 g of 4,4'-dihydroxydiphenylsulfone, 300 g of bisphenol A, 980 g of sodium para-phenolsulfonate, 240 g of sodium hydroxide, 1000 g of a 37% aqueous formaldehyde solution and 2980 g of water in a reaction vessel equipped with a reflux condenser, the mixture was heated at 100°C for 15 hours while stirring for a polycondensation reaction, to obtain an aqueous solution of polycondensation reaction product 2. The effective component concentration was 50 wt%.

### Synthesis Example 3

After loading 2500 g of 4,4'-dihydroxydiphenylsulfone, 1600 g of sodium para-phenolsulfonate, 250 g of sodium hydroxide, 1200 g of a 37% aqueous formaldehyde solution and 4050 g of water in a reaction vessel equipped with a reflux condenser, the mixture was heated at 100°C for 15 hours while stirring for a polycondensation reaction, to obtain an aqueous solution of polycondensation reaction product 3. The effective component concentration was 50 wt%.

### Example 1

After loading 1000 g of the aqueous solution of polycondensation reaction product 1 obtained in Synthesis Example 1, 62.5 g of sodium dithionite and 344 g of water in a reaction vessel equipped with a reflux condenser, reduction treatment was carried out by heating at 100°C for 2 hours while stirring, to obtain a formaldehyde condensate solution. The effective component concentration was 35 wt%.

### Example 2

After loading 1000 g of the aqueous solution of polycondensation reaction product 1 obtained in Synthesis Example 1, 62.5 g of sodium thiosulfate and 344 g of water in a reaction vessel equipped with a reflux condenser, reduction treatment was carried out by heating at 100°C for 4 hours while stirring, to obtain a formaldehyde condensate solution. The effective component concentration was 35 wt%.

### Example 3

After loading 1000 g of the aqueous solution of polycondensation reaction product 2 obtained in Synthesis Example 2, 62.5 g of sodium dithionite and 344 g of water in a reaction vessel equipped with a reflux condenser, reduction treatment was carried out by heating at 100°C for 2 hours while stirring, to obtain a formaldehyde condensate solution. The effective component concentration was 35 wt%.

### Example 4

After loading 1000 g of the aqueous solution of polycondensation reaction product 2 obtained in Synthesis Example 2, 62.5 g of sodium thiosulfate and 344 g of water in a reaction vessel equipped with a reflux condenser, reduction treatment was carried out by heating at 100°C for 4 hours while stirring, to obtain a formaldehyde condensate solution. The effective component concentration was 35 wt%.

### Example 5

After loading 1000 g of the aqueous solution of polycondensation reaction product 3 obtained in Synthesis Example 3, 62.5 g of sodium dithionite and 344 g of water in a reaction vessel equipped with a reflux condenser, reduction treatment was carried out by heating at 100°C for 2 hours while stirring, to obtain a formaldehyde condensate solution. The effective component concentration was 35 wt%.

### Example 6

After loading 1000 g of the aqueous solution of polycondensation reaction product 3 obtained in Synthesis Example 3, 62.5 g of sodium thiosulfate and 344 g of water in a reaction vessel equipped with a reflux condenser, reduction treatment was carried out by heating at 100°C for 4 hours while stirring, to obtain a formaldehyde condensate solution. The effective component concentration was 35 wt%.

### Comparative Example 1

After loading 1000 g of the aqueous solution of polycondensation reaction product 1 obtained in Synthesis Example 1, 10 g of 35% hydrogen peroxide water and 420 g of water in a reaction vessel, oxidation treatment was carried out by heating at 50°C for 2 hours while stirring, to obtain a formaldehyde condensate solution for comparison. The effective component concentration was 35 wt%.

### Comparative Example 2

The aqueous solution of polycondensation reaction product 1 obtained in Synthesis Example 1 was concentrated to dryness in a vacuum, and the dry cake was pulverized into powder. After mixing 150 g of the powdered polycondensation reaction product 1 in 500 g of 1 N sodium hydroxide while vigorously stirring, 54 g of acetic anhydride was added. After stirring for one hour, it was concentrated to dryness in a vacuum to obtain a formaldehyde condensate for comparison, which was a powder of the acylated polycondensation reaction product 1.

The polycondensation reaction products obtained in Synthesis Examples 1-3 and the formaldehyde condensates obtained in Examples 1-6 and Comparative Examples 1 and 2 were used for the following evaluation.

### 1) Dye fixing property

### (Treatment method)

Test fabric: Nylon-6 knitted fabric dyed with 2% o.w.f. of C.I. Acid Blue 129
Condensate (effective component): 1.0% o.w.f.
Acetic acid: 0.5 cc/liter
Liquor to goods ratio: 20:1
Treatment temperature and time: 90°C for 20 minutes

Exhaustion treatment under the above conditions was followed by rinsing, squeezing and drying (105°C for 5 minutes)

### (Evaluation test)

Washing fastness: According to JIS L-0844 method A-2
Perspiration fastness: According to JIS L-0848 using artificial alkaline perspiration.

The degree of contamination was judged visually on a 5-level scale. A smaller value indicates a weaker dye fixing property.

The evaluation results are shown in Table 1.

### 2) Treatment coloration and light fastness

### (Treatment method)

Test fabric: [1] nylon-6 white knitted fabric, [2] nylon-6 white carpet fabric
Condensate (effective component): 0.8% o.w.f.
Sulfamic acid: 2 g/liter
Liquor to goods ratio: 20:1
Treatment temperature and time: 90°C for 20 minutes

Exhaustion treatment under the above conditions was followed by rinsing, squeezing and drying (105°C x 5 minutes)

### (Evaluation test)

### Treatment coloration:

[1] Nylon-6 white knitted fabric: The degree of yellowing (Y.I.) was measured using a colorimeter (CM-3700d by MINOLTA). A larger value indicates greater treatment coloration.
[2] Nylon-6 white carpet fabric: The degree of yellowing was judged visually on a 5-level scale. A smaller value indicates greater treatment coloration.

Light fastness (exposure to a carbon arc fade-o-meter at 63°C for 20 hours):
[1] Nylon-6 white knitted fabric: The degree of yellowing (Y.I.) was measured using a colorimeter (CM-3700d by MINOLTA). A larger value indicates poorer light fastness.
[2] Nylon-6 white carpet fabric: The degree of yellowing was judged visually on a 5-level scale. A smaller value indicates poorer light fastness.

The evaluation results are shown in Table 2.

### 3) Contamination inhibiting property

### (Treatment method)

Test fabric: nylon-6 white carpet fabric
Condensate (effective component): 0.8% o.w.f.
Sulfamic acid: 2 g/liter
Liquor to goods ratio: 20:1
Treatment temperature and time: 90°C for 20 minutes

Exhaustion treatment under the above conditions was followed by rinsing, squeezing and drying (105°C for 5 minutes)

### (Evaluation test)

After being treated in a 0.1 g/liter aqueous solution of red food dye No.40 (acid dye), the nylon-6 carpet was allowed to stand at room temperature for one hour. It was then rinsed as thoroughly as possible with flowing water and dried. The degree of residual contamination was then judged visually on a 5-level scale. A smaller value indicates a poorer contamination inhibiting property.

The evaluation results are shown in Table 3.

**Table 1**

| Condensate | Washing fastness | Perspiration fastness |
|---|---|---|
| Untreated fabric (dyed) | 1 | 1 |
| Polycondensation reaction product 1 | 4 | 4-5 |
| Polycondensation reaction product 2 | 4 | 4-5 |
| polycendensation reaction product 3 | 4-3 | 4 |
| Example 1 | 4 | 4-5 |
| Example 2 | 4 | 4-5 |
| Example 3 | 4 | 4-5 |
| Example 4 | 4 | 4-5 |
| Example 5 | 4-3 | 4 |
| Example 6 | 4-3 | 4 |
| Comp. Ex. 1 | 3 | 3-4 |
| Comp. Ex. 2 | 3 | 3-4 |

**Table 2**

| Condensate | Treatment coloration | | Light fastness | |
|---|---|---|---|---|
| | Knit (Y.I.) | Carpet | Knit (Y.I.) | Carpet |
| Untreated fabric | -0.219 | 5 | 0.012 | 5 |
| Polycondensation reaction product 1 | 3.520 | 2-1 | 5.126 | 1 |
| Polycondensation reaction product 2 | 3.458 | 2 | 4.751 | 1-2 |
| Polycondensation reaction product 3 | 3.121 | 2 | 4.218 | 2 |
| Example 1 | 0.981 | 4-5 | 2.101 | 3 |
| Example 2 | 0.967 | 4-5 | 1.987 | 3 |
| Example 3 | 0.914 | 4-5 | 1.641 | 3-4 |
| Example 4 | 0.923 | 4-5 | 1.658 | 3-4 |
| Example 5 | 0.731 | 4-5 | 1.311 | 4 |
| Example 6 | 0.759 | 4-5 | 1.276 | 4 |
| Comp. Ex. 1. | 1.516 | 3-4 | 3.011 | 2-3 |
| Comp. Ex. 2 | 1.218 | 4 | 2.019 | 3 |

**Table 3**

| Condensate | Contamination inhibiting property |
|---|---|
| Untreated fabric | 1 |
| Polycondensation reaction product 1 | 4 |
| Polycondensation reaction product 2 | 4 |
| Polycondensation reaction product 3 | 4-5 |
| Example 1 | 4 |
| Example 2 | 4 |
| Example 3 | 4 |
| Example 4 | 4 |
| Example 5 | 4-5 |
| Example 6 | 4-5 |
| Comp. Ex. 1 | 3 |
| Comp. Ex. 2 | 3 |

As seen from the results in Tables 1 to 3, the fabrics using polyamide fiber material dye fixing agents and polyamide fiber material contamination inhibitors containing formaldehyde condensates, according to the invention, were free of treatment coloration without reduction in the dye fixing properties or contamination inhibiting properties of the polyamide fiber materials treated using the polycondensation reaction products prior to reduction treatment, while the light fastness was also improved over the comparative examples when treatment was carried out using the polycondensation reaction products prior to reduction treatment.

Using polyamide fiber material dye fixing agents and polyamide fiber material contamination inhibitors containing formaldehyde condensates according to the present invention for treatment of polyamide fiber materials can eliminate treatment coloration without reducing the dye fixing properties or the contamination inhibiting properties, while also preventing loss of light fastness.

## Claims

1. A formaldehyde condensate obtained by a polycondensation reaction of formaldehyde with a mixture comprising 30-70 wt% of a compound represented by the following general formula (1), 10-70 wt% of at least one type of compound represented by the following general formula (2), and optionally, the remainder of at least one type of compound represented by the following general formula (3), and then reduction treatment of the polycondensation reaction product with a dithionite represented by the following general formula (4) or a thiosulfate represented by the following general formula (5). 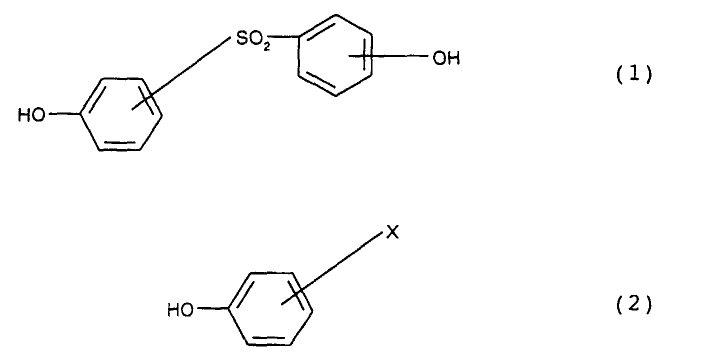 wherein X represents -SO₃M, 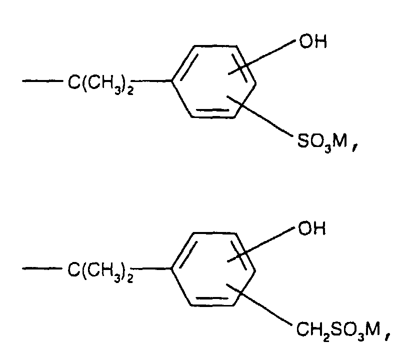 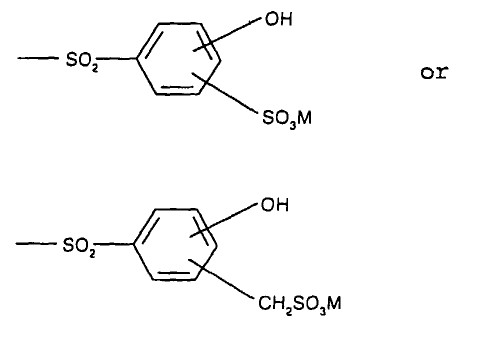 wherein each M represents a hydrogen atom, alkali metal, alkaline earth metal or -NH₄; 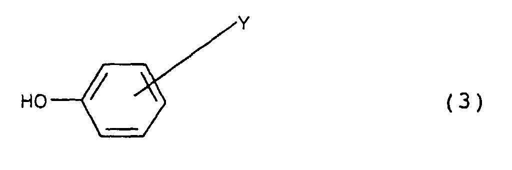 wherein Y represents a hydrogen atom, hydroxyl group, methyl group, 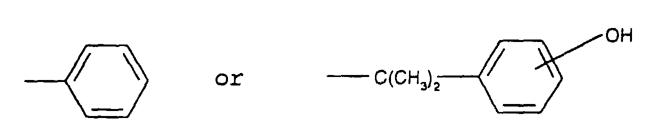
M¹S₂O₄ (4)
wherein M¹ represents an alkali metal, alkaline earth metal or -NH₄;
M²S₂O₃ (5)
wherein M² represents an alkali metal, alkaline earth metal or -NH₄.

2. A formaldehyde condensate according to claim 1, wherein the reduction treatment comprises mixing a dithionite or thiosulfate in an amount of 1-30 parts by weight with 100 parts by weight of the polycondensation reaction product, and heating at 40-150°C for reduction treatment.

3. A polyamide fiber material dye fixing agent containing a formaldehyde condensate according to claim 1.

4. A polyamide fiber material contamination inhibitor containing a formaldehyde condensate according to claim 1.
